# EUROPÄISCHE PATENTANMELDUNG

(11) **EP 1 027 820 A1**
(43) Veröffentlichungstag der Anmeldung: **16.08.2000**
(21) Anmeldenummer: 00102652.5
(22) Anmeldetag: 08.02.2000
(51) Int. Cl.: A01D 41/12

(54) **Spreuverteiler für einen Mähdrescher**

(30) Priorität: 09.02.1999 DE 19905329
(71) Anmelder: Schrattenecker, Franz, A-4773 Eggerding (AT)
(72) Erfinder: Schrattenecker, Franz, A-4773 Eggerding (AT)
(74) Vertreter: Zinnecker, Armin, Dipl.-Ing.

(57) **Zusammenfassung**

Ein Spreuverteiler dient zum Verteilen der über die Siebe eines Mähdreschers ausgeblasenen Spreu. Er besitzt eine Wanne (5), in der eine Fördereinrichtung (9, 14, 15) zum Fördern der Spreu angeordnet ist. An den Enden der Fördereinrichtung (9, 14, 15) ist eine Wurfeinrichtung oder eine Blaseinrichtung (21) für die Spreu angeordnet. Um einen derartigen Spreuverteiler zu verbessern, ist die Fördereinrichtung als geteilte, in entgegengesetzte Richtungen fördernde Fördereinrichtung (9, 14, 15) ausgebildet.

## Beschreibung

Die Erfindung betrifft einen Spreuverteiler, insbesondere für einen Mähdrescher. Die Erfindung betrifft ferner einen Mähdrescher mit einem Spreuverteiler.

Ein Spreuverteiler hat im allgemeinen die Aufgabe, bei einem Mähdrescher die Spreu zu verteilen. Üblicherweise befindet sich der Spreuverteiler in dem Mähdrescher hinter den Reinigungssieben. Er verteilt im allgemeinen die von der Reinigungsluft über die Siebe ausgeblasene Spreu hinter dem Mähdrescher gleichmäßig auf die Schüttlerbreite.

Aus der DE 35 46 679 C1 ist ein Spreuverteiler bekannt, bei dem zwei gegenläufig angetriebene Rotoren mit schaufelartigen Blättern in einem Gehäuse um zueinander parallele, beabstandete Achsen drehbar gelagert sind. Die Rotoren sind in ihren oberen und in ihren einander zugewandten Bereichen von etwa konzentrischen und rechtwinklig mit dem Abdeckblech des Gehäuse befestigten Deckblechen eingefaßt. Um die Streubreite auf einfache Weise einstellen zu können sind die Deckbleche an ihren Auslaufkanten gelenkig mit Leitblechen verbunden, deren Neigungswinkel einstellbar ist. Bei dem vorbekannten Spreuverteiler sind zwei nebeneinander angeordnete Wurfverteiler mit je einem Gehäuse vorhanden, in denen etwa horizontal gelagerte Wurfschaufeln drehbar gelagert und angetrieben sind. Bei dieser Ausführungsform wird die Spreu gegen die Gehäuse und die vorne nicht abgedeckten, gegenläufig rotierenden Wurfschaufeln geblasen und durch diese nach außen geschleudert. Die rotierenden Wurfschaufeln saugen in ihrem Zentrum Luft an, die durch die Rotation nach außen gegen den Gehäusemantel gedrückt und dabei um 90° umgelenkt wird, so daß sie gegen den Reinigungswind mit der ausgeblasenen Spreu gerichtet ist. Dadurch können Verwirbelungen entstehen, die den Auswurf stören und beeinträchtigen können.

Aus der EP 0 702 892 A1 ist ein Anbauhäcksler für einen Mähdrescher bekannt, bei dem ein topfförmiges Rotorgehäuse unter einem Übergabetrichter des Mähdreschers um eine vertikale Schwenkachse hin- und herschwenkbar gelagert ist. In dem topfförmigen Rotorgehäuse ist eine Werkzeugeinheit angeordnet, die um eine koaxial zur Schwenkachse verlaufende Achse rotiert und die die Spreu zerkleinert und gleichzeitig ausfördert. Zu diesem Zweck kann die Werkzeugeinheit als Schneid- und Wurfeinrichtung ausgebildet sein. Nach einer in der EP 0 702 892 A1 beschriebenen Ausführungsform wird die Spreu über eine den Sieben nachgeordnete Fördereinrichtung etwa bis zur Mitte von zwei Wurftrommeln gefördert. Am Ende der Fördereinrichtung fällt die Spreu nach unten, wo sie beispielsweise durch Schnecken zu einem oder zwei nebeneinander angeordneten Auswurfgehäusen mit um senkrechte Achsen rotierenden Wurischaufeln gefördert wird.

Bei einer weiteren vorbekannten Ausführungsform nach der DE 197 50 393 A1 wird die Spreu von zwei oder vier Radialgebläsen angesaugt und dann rechtwinklig zur Fahrtrichtung des Mähdreschers ausgeblasen. Dabei treten die nachteiligen Wirkungen der zunächst geschilderten beiden Ausführungsformen nicht auf, jedoch muß auch bei dem Spreuverteiler nach der DE 197 50 393 die Spreu auf den Durchmesser der Gebläse-Eintrittsöffnungen zusammengeführt werden.

Aus der DE 38 26 321 A1 ist ein Spreuverteiler nach dem Oberbegriff des Anspruchs 1 bekannt. Dieser Spreuverteiler besitzt eine Wanne, in der eine Fördereinrichtung zum Fördern der Spreu angeordnet ist, an deren Ende eine Blaseinrichtung für die Spreu angeordnet ist.

Aufgabe der Erfindung ist es, einen verbesserten Spreuverteiler vorzuschlagen.

Erfindungsgemäß wird diese Aufgabe durch die kennzeichnenden Merkmale des Anspruchs 1 gelöst. Der Spreuverteiler besitzt eine Wanne, in der eine Fördereinrichtung zum Fördern der Spreu angeordnet ist. Am Ende der Wanne ist eine Wurfeinrichtung oder Blaseinrichtung für die Spreu vorgesehen. Gemäß der Erfindung wird die allgemein in einem Bogen über die Reinigungssiebe des Mähdreschers ausgeblasene Spreu hinter diesen in einer Wanne aufgefangen und durch die in der Wanne angeordnete Fördereinrichtung bis zu dem Ende der Wanne gefördert. Die Fördereinrichtung ist als geteilte bzw. zweigeteilte, in entgegengesetzte Richtungen, vorzugsweise von innen nach außen, fördernde Fördereinrichtung ausgebildet. Die Fördereinrichtung ist vorzugsweise eine Förderschnecke, vorzugsweise eine zweigeteilte Förderschnecke. Es ist aber auch möglich, als Fördereinrichtung einen Förderer zu verwenden, vorzugsweise einen Ketten- oder Bandförderer, der vorzugsweise zweigeteilt ist, vorzugsweise derart, daß er die Spreu in der Wanne von innen nach außen fördert. Wenn eine zweigeteilte, von innen nach außen fördernde Fördereinrichtung verwendet wird, kann die in der Wanne aufgefangene Spreu durch diese in der Mitte geteilte Fördereinrichtung mengenmäßig jeweils zur Hälfte nach außen, vorzugsweise bis zu den Außenwänden des Spreuverteilers gefördert werden. Die Außenwände des Spreuverteilers sind vorzugsweise an den Mähdrescher-Seitenwänden befestigt, so daß die Spreu in diesem Fall bis zu den Mähdrescher-Seitenwänden gefördert wird. Die Fördereinrichtung kann dabei vorzugsweise aus Förderschnecken oder anders gestalteten Fördermitteln, beispielsweise einer Förderkette oder einem Förderband bestehen.

An dem Ende oder den Enden, vorzugsweise den äußeren Enden der Wanne bzw. der Fördereinrichtung, kann die Spreu dann durch eine Wurfeinrichtung (Schleudereinrichtung) oder eine Blaseinrichtung verteilt werden. Die Spreu kann mittels einer von einem Gebläse, vorzugsweise einem externen Gebläse zugeführten Ausblasluft oder von vorzugsweise beidseitig angeordneten Wurfgebläsen oder Wurfeinrichtungen vorzugsweise rechtwinklig zur Fahrtrichtung auf die Schnittbreite verteilt werden. Als Wurf- bzw. Blaseinrichtungen können alle Einrichtungen verwendet werden, die die Spreu nach außen werfen, schleudern, blasen oder sonst verteilen.

Weitere vorteilhafte Weiterbildungen sind in den weiteren Unteransprüchen beschrieben.

An dem Ende bzw. an den Enden der Wanne (Auffangwanne) kann eine bzw. jeweils eine oder mehrere Öffnungen vorgesehen sein. Die Öffnungen befinden sich vorzugsweise im unten liegenden Bereich der Wanne, die also vorzugsweise nach unten hin offen ist. Es ist aber auch möglich, die Öffnung oder die Öffnungen statt dessen oder zusätzlich in seitlichen Bereichen der Wanne vorzusehen. Durch die Öffnungen kann die Spreu aus der Wanne austreten und dann von der Wurf- oder Blaseinrichtung erfaßt und verteilt werden.

An der Öffnung kann ein Luftkanal vorbeiführen. Vorzugsweise wird dem Luftkanal Druckluft zugeführt, beispielsweise durch eine vorzugsweise externe Drucklufteinrichtung. Der oder die an der oder den Öffnungen vorbeiführenden Luftkanäle erfassen die aus der Wanne austretende Spreu und reißen diese mit sich.

Nach einer weiteren vorteilhaften Weiterbildung ist ein Gebläse vorgesehen, das sich in einem Luftkanal befinden kann, der an der Wanne bzw. deren Öffnung oder Öffnungen vorbeiführt oder der von der Wanne weg führt. Das Gebläse kann ein Axialgebläse oder ein Radialgebläse sein. Es kann sich am Anfang des Luftkanals befinden, aber auch an dessen Ende oder in dessen Mitte. Das Gebläse kann vor oder hinter einer oder mehreren Öffnungen der Wanne angeordnet sein.

Eine weitere vorteilhafte Weiterbildung ist dadurch gekennzeichnet, daß im Bereich des Endes bzw. der Enden der Fördereinrichtung rotierende Wurfschaufeln angeordnet sind. Die rotierenden Wurfschaufeln befinden sich vorzugsweise unterhalb der Wanne.

Nach einer weiteren vorteilhaften Weiterbildung ist die Fördereinrichtung bzw. Förderschnecke in Seitenwänden des Spreuverteilers gelagert. Wenn die Seitenwände des Spreuverteilers nach einer weiteren vorteilhaften Weiterbildung mit den Seitenwänden des Mähdreschers verbunden sind, kann die Fördereinrichtung bzw. Förderschnecke gleichzeitig in den Seitenwänden des Mähdreschers gelagert sein.

Es ist allerdings auch möglich, die Fördereinrichtung bzw. Förderschnecke in der Mitte des Spreuverteilers zu lagern. Dies ist insbesondere dann vorteilhaft, wenn es sich um eine zweigeteilte Fördereinrichtung bzw. Förderschnecke handelt, die die Spreu von der Mine nach außen fördert. Vorzugsweise ist die zweigeteilte Fördereinrichtung bzw. Förderschnecke nur in der Mitte gelagert, nicht aber an ihren äußeren Enden; die Fördereinrichtung bzw. Förderschnecke ist also vorzugsweise fliegend gelagert, so daß ihre Enden frei sind. Dies hat den Vorteil, daß die die Enden der Fördereinrichtung bzw. Förderschnecke verlassende Spreu nicht durch Lagereinrichtungen behindert wird. Sie kann in derselben, nach außen führenden Richtung weiterbewegt werden und muß nicht umgelenkt werden bzw. ihre Richtung ändern.

Eine weitere vorteilhafte Weiterbildung ist dadurch gekennzeichnet, daß zu beiden Seiten der Fördereinrichtung bzw. Förderschnecke jeweils ein Gebläse angeordnet ist. Dies ist insbesondere dann vorteilhaft, wenn die Fördereinrichtung bzw. Förderschnecke in der Mitte des Spreuverteilers gelagert ist. In diesem Fall können die Gebläse jeweils mit der Fördereinrichtung bzw. Förderschnecke fluchtend angeordnet werden, woduch eine besonders wirkungsvolle Förderung der Spreu ermöglicht wird.

Eine weitere vorteilhafte Weiterbildung ist dadurch gekennzeichnet, daß die Fördereinrichtung bzw. Förderschnecke mit der Spreuverteiler-Außenwand und/oder der Mähdrescher-Außenwand bündig abschließt. Die Enden der Fördereinrichtung bzw. Förderschnecke liegen also jeweils im Bereich der Außenwand des Spreuverteilers und/oder des Mähdreschers. Hierdurch wird die Gefahr ausgeschlossen, daß die geförderte Spreu sich stauen kann.

Nach einer weiteren vorteilhaften Weiterbildung ist im Bereich des Bodens des Spreuverteilers ein bewegliches, vorzugsweise schwenkbares Förderblech angeordnet. Das schwenkbare Förderblech wird vorzugsweise durch eine Schwenkeinrichtung auf und ab bewegt, so daß vor der Wanne herabfallende Spreu in die Wanne geworfen wird.

Die der Erfindung zugrundeliegende Aufgabe wird ferner durch einen Mähdrescher mit einem erfindungsgemäßen Spreuverteiler gelöst.

Ausführungsbeispiele der Erfindung werden nachstehen anhand der beigefügten Zeichnung im einzelnen erläutert. In der Zeichnung zeigt
- Fig. 1: einen Längsschnitt durch einen Mähdrescher mit Spreuverteiler im Bereich zwischen dem Ende der Reinigungssiebe und der Strohauslaufhaube,
- Fig. 1A: den Spreuverteiler in einer Seitenansicht entsprechend der Ansicht in Fig. 1,
- Fig. 2: den Spreuverteiler gemäß Fig. 1 bzw. Fig. 1A mit einer Wanne (Auffangwanne), einem zweigeteilten, in entgegengesetzte Richtungen nach außen fördernden Schneckenförderer und einer externen Luftzuführung in einem Vertikalschnitt,
- Fig. 2A: eine abgewandelte Ausführungsform des in Fig. 2 dargestellten Spreuverteilers, bei dem der Schneckenförderer (die Förderschnecke) in der Mitte des Spreuverteilers gelagert ist,
- Fig. 3: die vertikale Luftzuführung gemäß Fig. 2 in einem horizontalen Schnitt,
- Fig. 4: eine Abwandlung des in Fig. 2 gezeigten Spreuverteilers mit seitlichen Wurfeinrichtungen in einem Vertikalschnitt,
- Fig. 5: die Wurfeinrichtungen des Ausführungsbeispiels gemäß Fig. 4 in einem vertikalen Schnitt,
- Fig. 6: eine weitere Abwandlung des in Fig. 2 dargestellten Spreuverteilers mit zwei jeweils seitlich unterhalb der Wanne bzw. Auffangwanne angeordneten Axial-Gebläsen in einem Vertikalschnitt,
- Fig. 7: einen vertikalen Schnitt durch das Axialgebläse nach Fig. 6,
- Fig. 8: eine Abwandlung des in Fig. 2A dargestellten Spreuverteilers mit zwei jeweils seitlich oberhalb der Wanne bzw. Auffangwanne angeordneten Axialgebläsen in einem Vertikalschnitt,
- Fig. 9: einen vertikalen Schnitt durch das Axialgebläse gemäß Fig. 8,
- Fig. 10: eine abgewandelte Ausführungsform des Spreuverteilers mit einer Wanne (Auffangwanne), zwei gegenläufig nach außen fördernden Bandförderern und unterhalb der Auffanghaube seitlich angeordneten Wurfeinrichtungen in einem Vertikalschnitt,
- Fig. 11: einen vertikalen Längsschnitt durch den Spreuverteiler gemäß Fig. 10 und
- Fig. 12: eine Abwandlung des in Fig. 2A dargestellten Spreuverteilers, bei dem zu beiden Seiten der Förderschnecke jeweils ein Gebläse angeordnet ist.

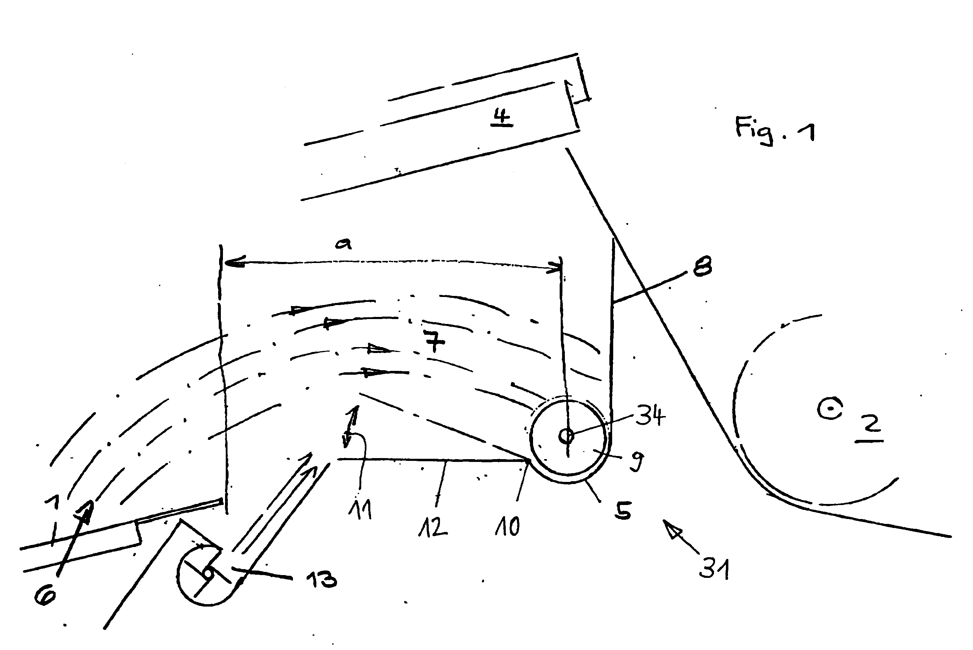

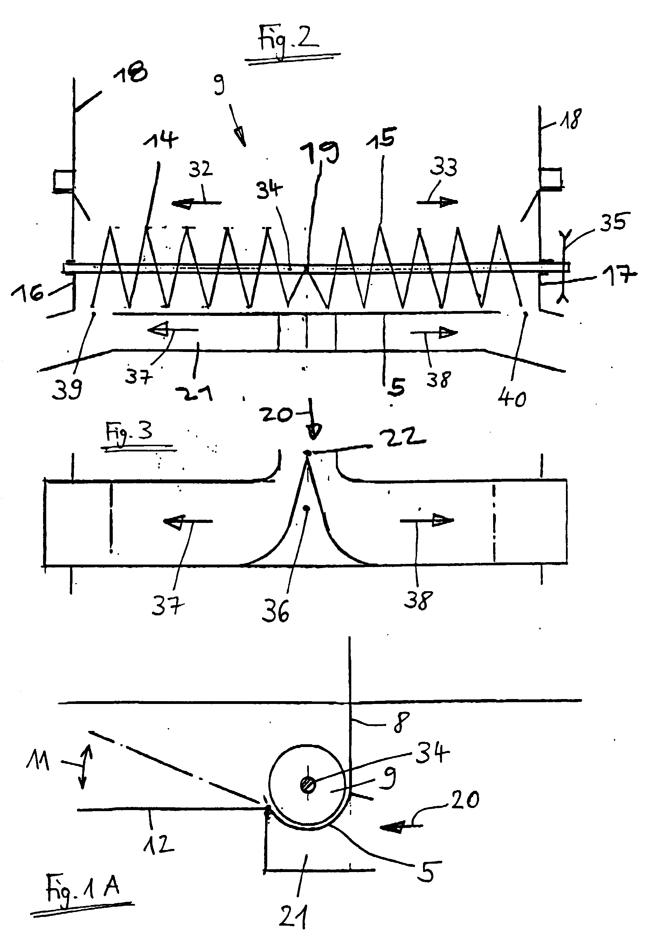

Die Fig. 1 zeigt einen Längsschnitt durch den hinteren Bereich eines Mähdreschers. Zwischen den Reinigungs-Sieben 1 und einem Strohhäcksler 2 sowie unterhalb der Schüttler 4 ist ein Spreuverteiler 31 angeordnet. Der Spreuverteiler 31 weist ein Gehäuse auf, welches eine Wanne (Auffangwanne) 5, ein Prallblech 8 und ein Förderblech 12 umfaßt. Die Wanne 5 besitzt einen im wesentlichen halbkreisförmigen, nach oben offenen Querschnitt. In der Wanne ist eine als zweigeteilte Förderschnecke 9 (s. Fig. 2) ausgestaltete Fördereinrichtung angeordnet. Das Prallblech 8 weist vom hinteren Ende der Wanne 5 nach oben. Es schließt sich tangential an das hintere Ende der Wanne 5 an. Die Drehachse 34 der Förderschnecke 3, die mit der Mittenachse der Wanne 5 übereinstimmt, ist in der aus Fig. 1 ersichtlichen Weise im Abstand a hinter dem Ende der Reinigungssiebe 1 angeordnet.

Die über die Reinigungssiebe 1 von einem Reinigungswind 6 ausgetragene Spreu 7 wird in der Wanne (Auffangwanne) 5 aufgefangen. Damit auch kräftiger ausgeblasene Spreu 7 in die Wanne 5 fällt, ist auf deren Rückseite das Prallblech 8 angeordnet, welches die Spreu am Weiterflug hindert und von dem die Spreu dann nach unten in die Wanne 5 fällt. An der Vorderseite der Wanne 5 ist das Förderblech 12 um die horizontale Achse 10 in Pfeilrichtung 11 hin und her schwenkbar angebracht. Die Schwenkachse 10 befindet sich am vorderen Ende der Wanne 5. Das Förderblech 12 wird durch eine Schwenkeinrichtung (in der Zeichnung nicht dargestellt) auf und ab bewegt, so daß vor der Wanne 5 herabfallende Spreu 7 in die Wanne 5 geworfen wird oder auf dem schräg stehenden Förderblech 12 (in der Zeichnung strichpunktiert dargestellt) nach unten in die Wanne 5 rutscht.

Unterhalb des Endes der Reinigungssiebe 1 ist eine Schleudereinrichtung 13 angeordnet, die im wesentlichen der in der DE 197 50 393 A1 in Fig. 1 dargestellten Ausführungsform (dort auch im Patentanspruch 13 wiedergegeben) entspricht und die um eine horizontale, zur Achse der Förderschnecke 9 parallele Achse rotierende Schleuderplatten umfaßt.

Die Förderschnecke 9 ist in der aus Fig. 2 ersichtlichen Weise als zweigeteilte Förderschnecke ausgebildet, die die Spreu von der Mitte 19 in Richtung der Pfeile 32, 33 nach außen fördert. Um dies zu erreichen haben die auf der gemeinsamen Achse 34 angeordneten Förderschnecken 14 und 15 eine entgegengesetzte Steigung. Die gemeinsame Achse 34 der Förderschnecke 9 ist seitlich in den Seitenwänden 16, 17 des Spreuverteilers bzw. des Spreuverteiler-Gehäuses gelagert, die mit den Seitenwänden 18 des Mähdreschers verbunden, nämlich verschraubt sind. Auf dem Ende der Achse 34, das die Seitenwand 17 durchdringt, ist eine Riemenscheibe 35 für einen Riementrieb befestigt.

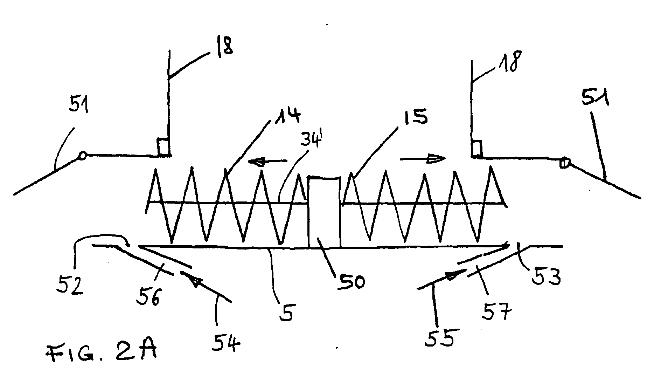

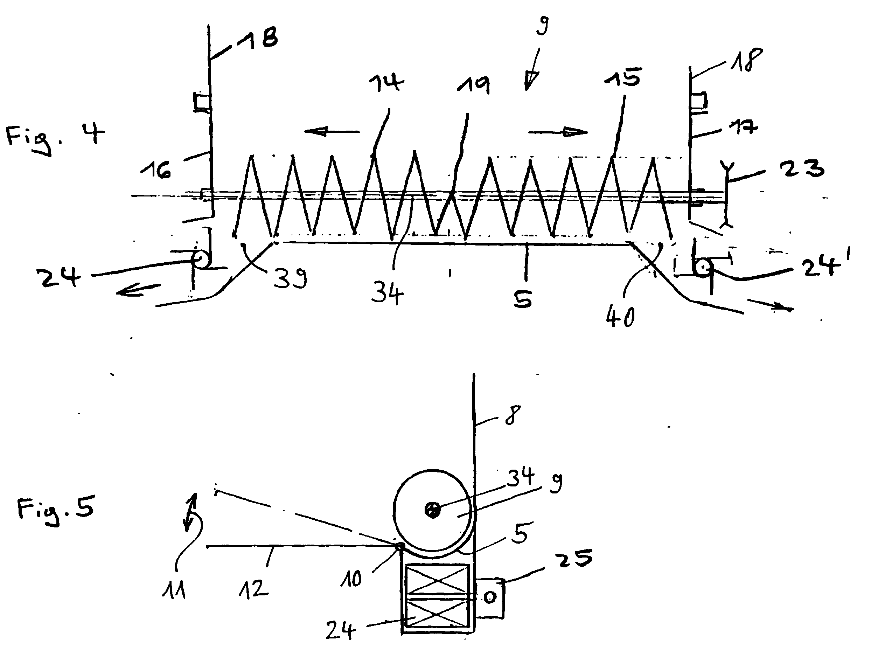

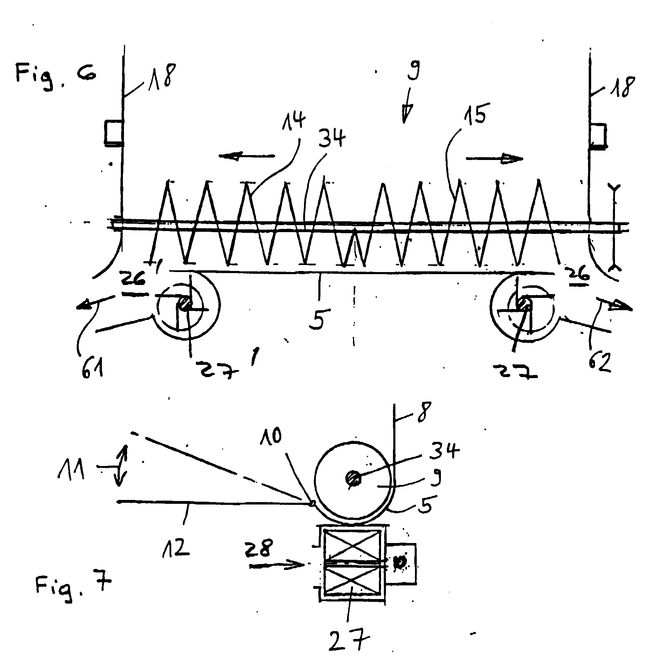

Unter der Wanne 5 ist ein Luftkanal 21 vorgesehen, der in Fig. 3 in einem horizontalen Schnitt dargestellt ist. Dem Luftkanal 21 wird externe Druckluft 20 in einem Kanal 22 zugeführt, die durch den Verteilkegel 36 in zwei Hälften geteilt wird. Die Druckluft strömt durch den Luftkanal 21 in entgegengesetzte Richtungen 37 und 38.

An den Enden der Wanne 5 ist jeweils eine nach unten offene Öffnung 39, 40 vorgesehen, durch die die nach außen geförderte Spreu austreten und nach unten in den Luftkanal 21 herabfallen kann. Sie wird dort von den Luftströmen 37 und 38 erfaßt und mitgerissen. Durch die in Richtung der Pfeile 37 und 38 an den Öffnungen 39 und 40 vorbeiströmende Luft wird ferner im Bereich der Öffnungen 39 und 40 ein Unterdruck erzeugt, der den Abtransport der dorthin geförderten Spreu beschleunigt. Die Spreu wird durch die Luftströme 37 und 38 zur Seite hin quer zur Fahrtrichtung des Mähdreschers auf die Schnittbreite (des Mähdreschers) verteilt.

Bei der in Fig. 2A dargestellten abgewandelten Form eines Spreuverteilers ist die Achse 34', auf der die Förderschnecken 14 und 15 befestigt sind, in ihrer Mitte auf einer zentralen Lagereinrichtung 50 gelagert. Die Förderschnecken 14 und 15 reichen über die Mähdrescher-Seitenwände 18 hinaus. Im Bereich des Endes der Förderschnecken 14 und 15 wird ein externer Luftstrom in die Wanne 5 eingebracht, der durch Öffnungen 52 und 53 im Boden der Wanne 5 eingeführt wird. Die externen Luftströmungen 54 und 55 werden durch schräg nach oben und außen verlaufende Rohrabschnitte 56 und 57 geführt, die in die Öffnungen 52 und 53 münden. Die Luftströmungen reißen die nach außen geförderte Spreu mit und transportieren sie weiter nach außen, wo sie dann den Spreuverteiler verlassen und auf die Schnittbreite verteilt werden. Im seitlichen Abstand von den Enden der Förderschnecken 14 und 15 sind Auswurfklappen 51 um horizontale Achsen drehbar und feststellbar gelagert. Durch die Stellung der Auswurfklappen 51 kann die Streubreite beeinflußt, eingestellt und reguliert werden.

Bei der Ausführungsform nach Fig. 2A wird die in der Wanne 5 in Richtung zu den Seitenwänden 18 geförderte Spreu durch den extern zugeführten Luftstrom 54, 55 an den Enden der Förderschnecken 14 und 15 quer zur Mähdrescher Fahrtrichtung auf die Schnittbreite verteilt.

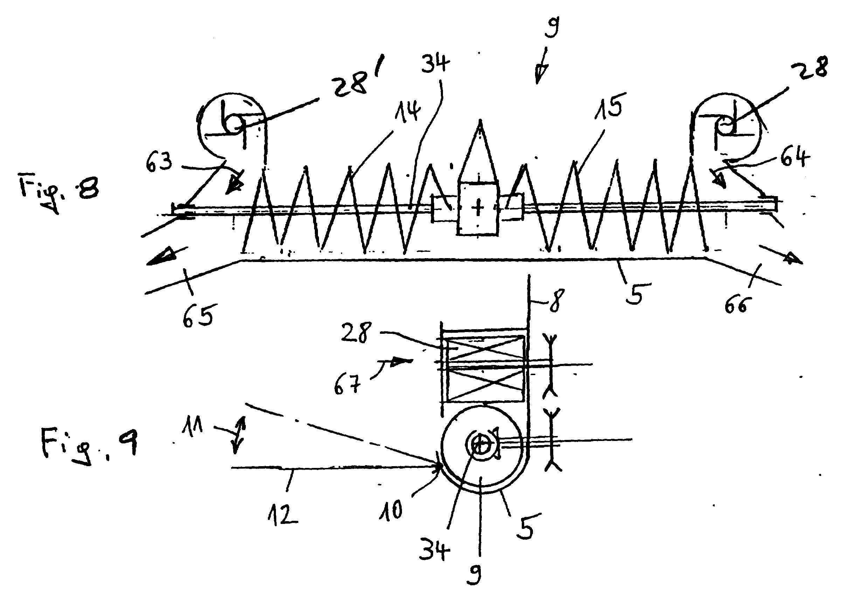

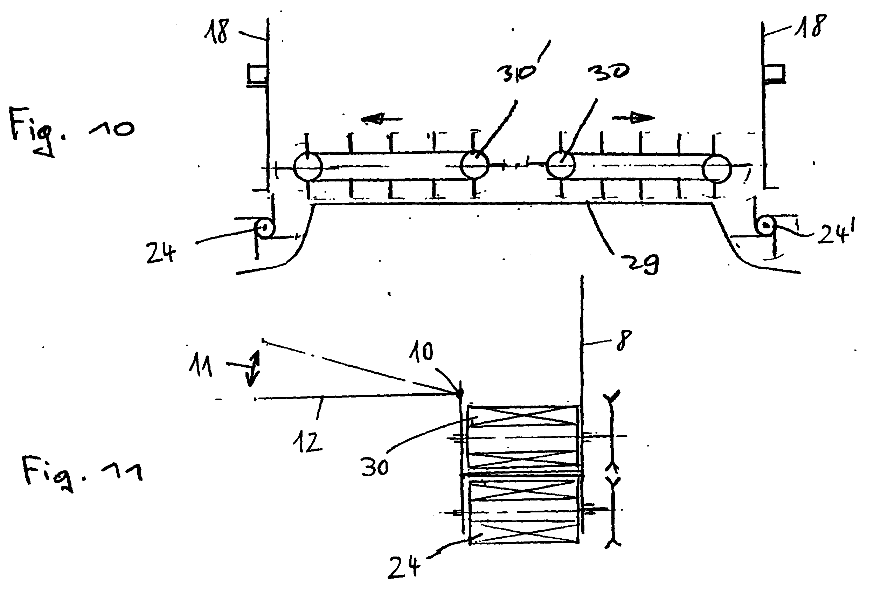

Die Fig. 4 und 5 zeigen eine abgewandelte Ausführungsform, bei der mit den vorangegangenen Ausführungsformen übereinstimmende Teile mit denselben Bezugszeichen versehen sind, so daß sie nicht erneut beschrieben werden müssen. Bei dieser Ausführungsform, die weitgehend mit derjenigen der Fig. 2 übereinstimmt, schließen sich an die Öffnungen 39 und 40 im Boden der Wanne 5 kurze Rohrabschnitte an, in denen Wurfrotoren 24 und 24' angeordnet sind, die um horizontale Achsen drehbar angetrieben sind. Die gemeinsame Achse 34 wird durch einen mit der Riemenscheibe 23 verbundenen Riementrieb angetrieben. Möglich ist allerdings auch jede andere Antriebsart, beispielsweise ein hydraulischer Antrieb (in der Zeichnung nicht dargestellt). Die von den Förderschnecken 14 und 15 jeweils nach außen geförderte Spreu fällt durch die Öffnungen 39 und 40 nach unten auf die Wurfrotoren 24 und 24', von denen sie zur Seite hin quer zur Fahrtrichtung des Mähdreschers auf die Schnittbreite verteilt wird.

In der Fig. 5 ist dargestellt, daß die Wurfrotoren 24 und 24' durch Kegelgetriebe 25 angetrieben werden. Auch hier sind allerdings andere Antriebsarten möglich, beispielsweise durch ein Riemengetriebe oder einen hydraulischen Antrieb.

Bei der in den Fig. 6 und 7 gezeigten Ausführungsform sind seitlich unterhalb der Wanne 5 Wurfgebläse 27 und 27' angeordnet, die um horizontale Achsen angetrieben sind. Der durch die Wurfgebläse 27 und 27' in den Luftkanälen 26 und 26' erzeugte Luftstrom 61, 62 transportiert die von den Förderschnecken 14 und 15 nach außen transportierte Spreu weiter nach außen und verteilt sie über die Schnittbreite des Mähdreschers. Dabei fällt die von den Förderschnecken 14 und 15 nach außen transportierte Spreu durch die im Boden der Wanne 5 vorgesehenen Öffnungen nach unten, wo sie von dem Luftstrom 61, 62 erfaßt und mitgeführt wird.

Aus dem horizontalen Schnitt der Fig. 7 ist ersichtlich, daß die Wurfgebläse 27 und 27' die Luft 28 von vorne ansaugen. Die Wurfgebläse 27 und 27' haben eine horizontale Antriebsachse. Sie werden durch einen Kegeltrieb angetrieben. Grundsätzlich ist jedoch auch eine vertikale Antriebsachse und anstelle des dargestellten Kegeltriebs jede andere Antriebsart, zum Beispiel ein hydraulischer Antrieb, möglich.

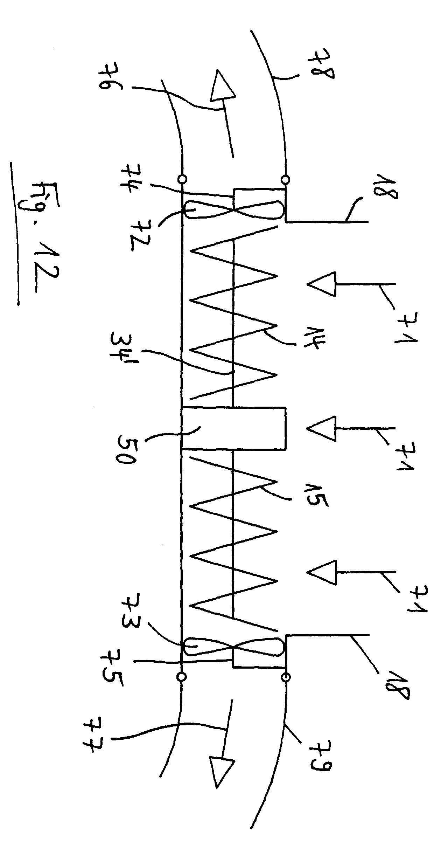

Die Ausführungsform nach den Fig. 8 und 9 stimmt im wesentlichen nach den Fig. 6 und 7 überein. Im Unterschied zu der Ausführungsform nach den Fig. 6 und 7 sind jedoch bei der Ausführungsform nach den Fig. 8 und 9 Wurfgebläse 28 und 28' vorhanden, die oberhalb der Enden der Förderschnecken 14 und 15 angeordnet sind und die Druckluft 63, 64 jeweils schräg nach unten und außen zu den äußeren Enden der Förderschnecken 14 und 15 fördern. Die Luftströmung erfaßt dort die nach außen geförderte Spreu und verteilt sie - durch kurze Rohrabschnitte 65, 66 hindurch - auf die Schnittbreite des Mähdreschers. Wie aus Fig. 8 ersichtlich ist die Förderschnecke 9 dort mittig gelagert.

Aus Fig. 9 ist ersichtlich, daß die Wurfgebläse 28 und 28' die Luft 67 von vorne ansaugen. Die Wurfgebläse 28 und 28' haben eine horizontale Antriebsachse. Es ist jedoch auch hier eine vertikale Antriebsachse möglich. Ferner kann statt des dargestellten Riementriebes jede andere Antriebsart, zum Beispiel ein hydraulischer Antrieb, verwendet werden.

Bei der in den Fig. 10 und 11 dargestellten weiteren Ausführungsform wird die Fördereinrichtung von in der Wanne 29 angeordneten Bandförderern 30 und 30' gebildet, die derart gegenläufig angetrieben sind, daß sie die auf die Bandförderer fallende Spreu jeweils nach außen zu den Seitenwänden transportieren. Unterhalb der äußeren Enden der Wanne sind Wurfrotoren 24, 24' vorhanden, und zwar in einer Anordnung, die im wesentlichen derjenigen nach den Fig. 4 und 5 entspricht. Die von den Bandförderern 30 und 30' nach außen transportierte Spreu fällt von den äußeren Enden der Bandförderer nach unten auf die Wurfrotoren 24, 24', von denen sie auf die Schnittbreite verteilt wird.

Die in Fig. 12 gezeigte Ausführungsform stimmt teilweise mit derjenigen nach Fig. 2 A überein, wobei gleiche Teile mit gleichen Bezugszeichen versehen sind. Die Achse 34', an der die gegenläufigen Förderschnecken 14 und 15 befestigt sind, ist in ihrer Mitte auf einer zentralen Lagereinrichtung 50 gelagert. Sie wird auch durch die Lagereinrichtung 50 angetrieben, und zwar derart, daß die in Richtung der Pfeile 71 vom Mähdrescher herantransportierte Spreu jeweils nach außen gefördert wird. Die Förderschnecken 14 und 15 sind fliegend gelagert. Sie sind also an ihren Enden ― wie in der Ausführungsform gemäß Fig. 2 A, aber im Unterschied zur Ausführungsform gemäß Fig. 8 ― nicht gelagert, sondern frei. Zu beiden Seiten der Förderschnecken 14 und 15 ist jeweils ein Gebläse 72, 73 angeordnet, deren Drehachsen 74, 75 mit der Achse 34' der Förderschnecken 14 und 15 fluchten. Durch die Lüfterflügel der Gebläse (Axialgebläse) 72, 73 wird die an die äußeren Enden der Förderschnecken 14 und 15 transportierte Spreu weiter nach außen gefördert, und zwar in Richtung der Pfeile 76, 77 in die an die Gebläse 72 und 73 anschließenden Rohrabschnitte 78, 79 hinein. Die Rohrabschnitte 78, 79, die den Auswurf bilden, sind im Anstellwinkel verstellbar und drehbar.

Wie aus Fig. 12 ersichtlich schließen die äußeren Enden der Förderschnecken 14 und 15 bündig mit der jeweiligen Mähdrescher-Außenwand 18 ab. Dies ist auch bei den Ausführungsformen nach den Figuren 2, 4, 6, 8 und 10 der Fall, nicht aber bei der Ausführungsform nach Fig. 2 A, bei der die äußeren Enden der Förderschnekken 14 und 15 weiter reichen als die Mähdrescher-Außenwände 18. Es ist möglich, daß eine einzige, durchgehende Achse 34' vorhanden ist, auf der die Förderschnecken 14 und 15 mit jeweils gegenläufiger Steigung angeordnet sind, so daß die Spreu auf beiden Seiten der Lagereinrichtung 50 nach außen gefördert wird. Grundsätzlich könnten allerdings auch zwei Achsen vorhanden sein, und zwar eine für die Förderschnecke 14 und die andere für die Förderschnecke 15. In diesem Fall wäre es auch möglich, die beiden Achsen gegensinnig anzutreiben, um auf diese Weise eine Förderung von der Mitte jeweils nach außen zu erreichen.

Dadurch, daß die Förderschnecken 14 und 15 bündig mit den MähdrescherAußenwänden 18 abschließen, wird verhindert, daß die Spreu sich staut. Dies kann auch dadurch verhindert werden, daß die Förderschnecken 14 und 15, wie in Fig. 2 A dargestellt, über die Mähdrescher-Außenwände hinaus reichen. Die äußeren Enden der Förderschnecken 14 und 15 dürfen allerdings nicht so weit innerhalb der Mähdrescher-Außenwände liegen, daß die Spreu sich stauen kann.

Durch die Erfindung wird ein Spreuverteiler geschaffen, der eine hinter den Sieben des Mähdreschers quer zu dessen Fahrtrichtung angeordnete Wanne aufweist. Die Länge der Wanne kann der Breite der Mähdrescher-Auslaufhaube entsprechen. In der Wanne befindet sich eine Fördereinrichtung, die als etwa in der Mitte der Wanne zweigeteilte Fördereinrichtung ausgebildet ist. Die in der Wanne aufgefangene Spreu kann auf diese Weise in zwei Mengenhälften aufgeteilt werden, die jeweils nach außen zu den beiden Seitenwänden gefördert werden. An den äußeren Enden der Wanne bzw. der Fördereinrichtungen sind Wurf- oder Blaseinrichtungen angeordnet, die die Spreu in einen außerhalb der Seitenwände liegenden Bereich werfen. Die nach außen geförderte Spreu kann mittels eines extern zugeführten Luftstromes oder mittels seitlich unterhalb der Wanne angeordneten Schleudereinrichtungen oder mittels seitlich unterhalb oder oberhalb der Wanne angeordneten Wurfgebläsen etwa auf die Schnittbreite des Mähdreschers verteilt werden.

Vorteilhaft ist es, wenn zu beiden Seiten der Fördereinrichtung bzw. Förderschnekke jeweils ein Gebläse angeordnet ist, wobei die Gebläse vorzugsweise koaxial zur Fördereinrichtung bzw. Förderschnecke verlaufen. Um zu verhindern, daß sich die Spreu staut, schließt die Fördereinrichtung bzw. Förderschnecke vorzugsweise mit der Spreuverteiler- Außenwand und/oder mit der Mähdrescher-Außenwand im wesentlichen bündig ab.

## Patentansprüche

1. Spreuverteiler
mit einer Wanne (5; 29), in der eine Fördereinrichtung (9, 14, 15; 30, 30') zum Fördern der Spreu (7) angeordnet ist,
an deren Ende eine Wurfeinrichtung (24, 24') oder eine Blaseinrichtung (21, 56, 57, 27, 27', 28, 28') für die Spreu angeordnet ist,
dadurch gekennzeichnet,
daß die Fördereinrichtung als geteilte, in entgegengesetzte Richtungen fördernde Fördereinrichtung (9, 14, 15; 30, 30') ausgebildet ist.

2. Spreuverteiler nach Anspruch 1, dadurch gekennzeichnet, daß die Fördereinrichtung eine zweigeteilte Förderschnecke (9, 14, 15) ist.

3. Spreuverteiler nach Anspruch 1 oder 2, dadurch gekennzeichnet, daß die Fördereinrichtung ein zweigeteilter Ketten- oder Bandförderer (30, 30') ist.

4. Spreuverteiler nach einem der vorhergehenden Ansprüche, dadurch gekennzeichnet, daß an den Enden der Wanne (5) jeweils eine Öffnung (39, 40) vorgesehen ist.

5. Spreuverteiler nach Anspruch 4, gekennzeichnet durch einen an den Öffnungen (39, 40) vorbeiführenden Luftkanal (21, 56, 57).

6. Spreuverteiler nach einem der vorhergehenden Ansprüche, gekennzeichnet durch ein Gebläse.

7. Spreuverteiler nach einem der vorhergehenden Ansprüche, dadurch gekennzeichnet, daß im Bereich des Endes bzw. der Enden der Fördereinrichtung rotierende Wurfschaufeln (24, 24', 27, 27', 28, 28') angeordnet sind.

8. Spreuverteiler nach einem der vorhergehenden Ansprüche, dadurch gekennzeichnet, daß die Fördereinrichtung bzw. Förderschnecke in Seitenwänden (16, 17) des Spreuverteilers (31) gelagert ist.

9. Spreuverteiler nach einem der vorhergehenden Ansprüche, dadurch gekennzeichnet, daß die Fördereinrichtung bzw. Förderschnecke in der Mitte des Spreuverteilers gelagert ist.

10. Spreuverteiler nach einem der vorhergehenden Ansprüche, dadurch gekennzeichnet, daß zu beiden Seiten der Fördereinrichtung bzw. Förderschnecke jeweils ein Gebläse (72, 73) angeordnet ist.

11. Spreuverteiler nach einem der vorhergehenden Ansprüche, dadurch gekennzeichnet, daß die Fördereinrichtung bzw. Förderschnecke mit der Spreuverteiler-Außenwand und/oder der Mähdrescher-Außenwand (18) bündig abschließt.

12. Spreuverteiler nach einem der vorhergehenden Ansprüche, dadurch gekennzeichnet, daß im Bereich des Bodens des Spreuverteilers (31) ein bewegliches, vorzugsweise schwenkbares (11) Förderblech (12) angeordnet ist.

13. Mähdrescher,
gekennzeichnet durch
einen Spreuverteiler nach einem der Ansprüche 1 bis 12.
